# EUROPEAN PATENT SPECIFICATION

(11) **EP 3 915 841 B1**
(45) Date of publication and mention of the grant of the patent: **29.06.2022**
(21) Application number: 20181750.9
(22) Date of filing: 23.06.2020
(51) Int. Cl.: B60R 9/06, B60R 9/10, B60R 13/10

(54) **LOAD CARRIER**
LASTENTRÄGER
SUPPORT DE CHARGE

(30) Priority: 25.05.2020 CN 202010447203
(43) Date of publication of application: 01.12.2021
(73) Proprietor: Carman Enterprise Co., Ltd., Yuhang District Hangzhou Zhejiang 311121 (CN)
(72) Inventor: WANG, Junqiang, Yuhang Town,Yuhang District, Hangzhou (CN)
(74) Representative: Paul & Albrecht Patentanwälte PartG mbB

(56) References cited:
- EP-A1- 2 363 323
- EP-A1- 3 575 152
- EP-B1- 2 457 777
- BE-A6- 1 012 537
- DE-A1- 4 315 292
- DE-A1-102004 022 835
- DE-A1-102007 015 603
- DE-A1-102013 006 782
- ES-A1- 2 718 215
- US-B1- 7 818 905

## Description

The present invention relates to a load carrier, in particular a carrier for bicycles and/or luggage, for attachment to the rear side of a vehicle.

Load carriers for fastening to the rear end of a vehicle, in particular a motor vehicle such as a car, are often used for transporting bicycles and/or additional luggage exceeding the capacity of the luggage compartment of the car. Generally, this type of load carrier comprises a coupling device at its front end region which is normally designed so that the load carrier can be fastened to the ball of a conventional trailer coupling. Furthermore, such load carriers for transporting bicycles comprise a carrier frame to which profile rails for receiving the wheels of bicycles are fastened. These profile rails are normally arranged transversely to the direction of travel and substantially horizontally, and comprise fastening means for fixing the bicycles to the profile rail. Other load carriers exist as luggage carries, wherein the carrier frame carries a luggage box, in which luggage, for example suitcases, can be stored.

At such load carriers, it is sometimes considered as disadvantageous that - when mounted to the rear end of a vehicle and provided with bicycles and/or a luggage box - it is difficult or even impossible to have access to the luggage compartment of the vehicle. If, for example, on a longer journey someone would like to take belongings out of the luggage compartment during a break, the load carrier must be disconnected from the trailer coupling and - in most cases - the bicycles must be removed or the luggage must be taken out of the luggage box in order to allow to open the luggage compartment lid.

To avoid this problem and to allow an easy access to the luggage compartment of the vehicle, EP 2 457 777 B1 suggests a load carrier with a basic frame and a sliding frame unit comprising a sliding frame for receiving a load, in particular for receiving bicycles. The sliding frame further carries a license plate holder and two rear light units arranged on both sides of the license plate holder. EP 2 363 323 B1 discloses a prior art load carrier with a pivotable license plate holder.

The sliding frame unit is movable relative to the basic frame between a front transport position, in which the sliding frame is aligned with the basic frame, and a rear access position, in which it is possible to open the luggage compartment to the vehicle. In order to bring the sliding frame unit into the access position, the sliding frame is moved linearly backwards and tilted backwards relative to the basic frame, meaning that the movement of the sliding frame relative to the basic frame has two degrees of freedom. In concrete terms, the sliding frame is moved translationally backwards and pivoted backwards in order to bring the load out of the movement range of the luggage compartment lid of the vehicle.

Even if such a load carrier has proven its worth in principle, it is sometimes considered as disadvantageous that the kinematics allowing two degrees of freedom is complicated and that the sliding frame unit with the sliding frame carrying further parts, namely the license plate holder and the rear light units at its rear end, is relatively heavy and uncomfortable to move by hand. Therefore, it is an object of the present invention to provide an alternative load carrier, which allows an easy access to the luggage compartment, when mounted, and which is easy to operate and reliable.

This object is solved by a load carrier, in particular a carrier for bicycles and/or luggage for attachment to the rear side of a vehicle, with a basic structure having a basic frame and a coupling device for attachment to a vehicle arranged at a front end of the basic frame, a sliding frame for receiving a load, in particular for receiving bicycles or a luggage box, wherein the sliding frame is slidingly movable relative to the basic frame between a front transport position and a rear access position, and a functional device, which is movably held at the basic frame, in particular at a rear end section of the basic frame, between a working position, in which the functional device extends at least partially into the movement range of the sliding frame, and a release position, in which the functional device is moved out of the movement range of the sliding frame allowing to move the sliding frame into its rear access position.

The invention is based on the consideration to provide a functional device, for example a unit comprising a license plate holder and two rear light units, which is not mounted at the sliding frame. Instead, the functional device is mounted at the basic frame. In this way, it is possible to design the sliding frame in a weight-optimized manner.

Furthermore, by mounting the functional device at the basic frame instead of the sliding frame, it is not necessary to provide exposed supply means, for example cables, for supplying the functional device with energy, in particular electrical energy, as the functional device is not moved together with the sliding frame relative to the basic frame. In other words, if the functional device comprises rear light units, exposed cable sections can be avoided as the cable remains at the same place and does not need to be extended.

When the load carrier is mounted to a vehicle and the sliding frame is in its front transport position, the functional device extends into the movement range of the sliding frame. In particular, the functional device can be positioned behind the sliding frame, when the sliding frame is in its front transport position. In this situation, the functional device would block the sliding frame. Therefore, it is provided that the functional device can be moved out of the movement range of the sliding frame, thus releasing the sliding frame and allowing a movement into its rear access position.

Accordingly, the sliding frame is moved purely translationally from the front transport position into the rear access position, i.e. a longitudinal direction of the load carrier. In this way, an easy kinematic can be achieved, as the sliding frame has only one degree of freedom relative to the basic frame.

According to a preferred embodiment of the invention, the functional device and the sliding frame are coupled such that the functional device is automatically moved into its release position, when the sliding frame is moved out of the front transport position in the direction of its rear access position, and the functional device is automatically moved into its working position, when the sliding frame is moved into the front transport position. Accordingly, a kinematic coupling between the sliding frame and the functional device is realized such that no independent actuation of the sliding frame and the functional device are necessary but it is sufficient that the sliding frame is moved between the transport position and the access position automatically bringing the functional device out of the movement range of the sliding frame. In other words, the operator only has to move the sliding frame linearly backwards into its rear access position or into the front into its transport position, and this linear movement is translated into a movement of the functional device due to the kinematic coupling.

Preferably, the functional device is pivotably held at the basic frame between its working position and its release position about a pivot axis. Such a pivot axis can in particular extend transversely, preferably perpendicularly to the longitudinal direction of the load carrier. In other words, the functional device can be tilted out of the movement range of the sliding frame in order to allow the sliding frame to be moved into its rear access position.

It may be provided that the load carrier comprises at least one, in particular two support elements, each support element being fixedly connected to the functional device and pivotably connected to the basic frame. Such support elements form intermediate elements between the functional device and the basic frame working as a lever arm increasing the travel path of the functional device. In other words, the support element(s) are directly connected to the basic frame and to the functional device. In concrete terms, the pivotable connection of the support elements to the basic frame can be realized by a pivot pin protruding from the basic frame and engaging into a corresponding hole of the support element. Such a pivot pin can also have a threaded zone and can in particular be formed as a screw. In this way, the support element(s) can be fixed in the longitudinal direction of the pivot pin at the basic frame and an unintentional movement of the support element in this direction is avoided. It is also conceivable that at least one, in particular each support element comprises a pivot pin, which protrudes and extends into a corresponding hole formed in the basic frame.

In order to limit the movability of the support element and the functional device relative to the basic frame, at least one, in particular each support element has an oblong hole into which a corresponding guide bolt fixedly attached to the basic frame extends. By means of such an oblong hole the movability of the support element can be limited to a defined angular range. The guide bolt extending into the oblong hole defines the limits of this angular range by coming into contact with the ends of the oblong hole. The guide bolt can be fixed to the basic frame, in particular screwed or welded thereto. Preferably, each guide bolt extends parallel to the pivot axis of the support element(s).

In a further elaboration of this embodiment, the oblong hole of at least one, in particular of each support element has a curved shape extending along a circle about the pivot axis. Preferably, the oblong hole of at least one, in particular of each support element is formed such that the guide bolt reaches one end of the oblong hole when the functional device is in its release position. In other words, one end of the oblong hole defines the release position of the functional device and limits the movability in this direction. Accordingly, when the guide bolt reaches this end of the oblong hole, the functional device is out of the movement range of the sliding frame.

According to a preferred embodiment, at least one, in particular each support element comprises two arms, wherein one supporting arm extends from the pivot axis to the functional device and is fixedly connected, in particular screwed, thereto, and wherein the other coupling arm extends from the pivot axis in the direction of the sliding frame. In other words, the support element may have two arms which have different functions. The first supporting arm has the function to support the functional device and to connect this functional device with the basic frame. A second arm extending in the direction of the sliding frame realizes the coupling between the translational movement of the sliding frame and the pivoting movement of the support element and the functional device. The angle between the supporting arm and the coupling arm may be in the range between 70° and 110° and is preferably about 90°.

The sliding frame may comprise at least one pusher dog element, in particular in the form of a pusher dog pin, assigned to a corresponding support element and formed such that it releases the functional device and the support element(s) allowing them to move into their release position, when the sliding frame is moved out of its transport position, and such that it applies a momentum about the pivot axis by pushing against the coupling arm of the support element in order to bring the functional device into its working position, when the sliding frame is moved into its transport position.

Accordingly, the coupling between the translational movement of the sliding frame and the pivoting movement of the support element(s) and the functional device is realized by a pusher dog mechanism. When the sliding frame is moved from its front transport position into its rear access position, the pusher dog element bearing against the coupling arm of the at least one support element releases this coupling arm allowing the functional device to move out of the movement range of the sliding frame. The release position of the functional device is determined by the guide bolt being in contact with the end of the oblong hole formed in the support element. When the sliding frame is moved from the access position into its front transport position the pusher dog element comes into contact with a corresponding contact surface formed at the coupling arm of the support element. The pusher dog element pushes against this contact surface of the coupling arm of the support element applying a momentum such that the functional device is brought into its working position. When the sliding frame has reached its front transport position, the functional device is held in its working position by the contact of the pusher dog element with the coupling arm of the support element.

According to preferred embodiment of the invention, the functional device projects to the rear side from the basic frame and from the pivot axis such that the functional device is moved into its release position by gravity force when the pusher dog element releases the functional device and the corresponding support element. Hence, the functional device is tilted downwardly by the gravity force when such a movement is possible due to the movement of the pusher dog element backwards. Such a movement based on gravity force is advantageous as no other elements applying a momentum on the support elements and the functional device is necessary and a risk of a malfunctioning is significantly decreased.

Preferably, the basic frame has a C-shaped structure open to the rear side. It may be provided that the load carrier comprises exactly two support elements, wherein each C-leg of the basic frame holds one support element in a pivotable manner at its rear end section, wherein the support elements are in particular arranged at the inner sides of the C-legs. Such a fixation of the functional device and the support elements at two laterally spaced apart C-legs allows a stable construction of the load carrier and a stable and reliable fixation of the functional device at the basic frame. The support elements being arranged at the inner sides of the C-legs are advantageous as the risk of damaging by external forces is minimized.

The basic frame may, for example, be formed as a welded structure, wherein several profiles, in particular rectangular profiles, are welded to one another in order to obtain a C-shaped structure which is open to the rear side. For example, two C-legs may be connected by one transverse front profile, to which a coupling device for attachment to a vehicle is fixed, for example screwed or welded. The C-legs may each comprise a base profile and an upper profile aligned to each other and fixedly attached to each other, for example screwed or welded to each other.

In order to guide the sliding frame, the basic frame may comprise, in particular at its upper side and preferably on each C-leg, at least one sliding guide. In concrete terms, the sliding guide may be formed as a groove, in particular as a dovetail-shaped groove, into which a corresponding protrusion formed in the sliding frame engages in a form-fit manner. It is also conceivable that the basic frame comprises a protrusion engaging into a corresponding groove of the sliding frame engages in a form-fit manner. In both ways, an easy and stable sliding guide of the sliding frames on the basic frame is realized, in particular when both C-legs have one sliding guide.

Preferably, arresting means are provided in order to lock the sliding frame relative to the basic frame in its transport position. Such arresting means may comprise at least one locking pin held at the sliding frame and movable between a locking position, in which the locking pin engages into a corresponding hole formed in the basic frame, and an unlocking position, in which the locking pin is out of engagement from a corresponding hole formed in the basic frame thus allowing the sliding frame to be moved relative to the basic frame. By means of such arresting means, an unintentional movement of the sliding frame out of its transport position is avoided during use. In other words, an operator has to unlock the locking pin intentionally in order to be able to move the sliding frame out of its front transport position.

In concrete terms, the arresting means may comprise exactly two locking pins, wherein, in particular, each of the locking pins is assigned to one C-leg of the basic frame. In this way, a very stable locking is achieved. Furthermore, it may be provided that each locking pin is biased, in particular by means of a spring element, into its locking position. This presents an important safety feature as the operator must bring the locking pin out of engagement against the restoring force of such a spring element. An unintentional unlocking of the sliding frame is avoided.

The sliding frame may further comprise stop means, which limit the movability relative to the basic frame at least in one direction. For example, the sliding frame may have at its rear end region a rear stop surface oriented to the front, which comes into contact with a corresponding counter-surface formed at the basic frame, when the sliding frame reaches its front transport position. In a similar manner, the sliding frame may comprise a front surface pointing to the rear coming into contact with a corresponding counter-surface of the basic frame in order to limit the movability to the rear side and to avoid an unintended separation of the sliding frame from the basic frame. The stop surfaces may define the front transport position and/or the rear access position of the sliding frame relative to the basic frame.

According to an embodiment of the present invention, the functional device may comprise a license plate holder. In concrete terms, the functional device may comprise a basic carrier element carrying the license plate holder and fixedly attached to two support elements. Such a license plate holder is normally positioned at the rear end of the load carrier. According to the invention, this license plate holder is not fixedly attached to the sliding frame, but to the basic frame allowing to design the sliding frame less heavy. Providing a basic carrier element carrying the license plate holder and, on the other hand, fixedly attached to two support elements allows a stable design of the functional device. Preferably, this basic carrier element can be provided as a profile, in particular a rectangular profile. The support elements may comprise at the end of their supporting arms a recess, in particular a U-shaped recess, into which the basic carrier element engages. The basic carrier element of the functional device can be screwed to the support elements.

Furthermore, the functional device may comprise two rear light units spaced laterally apart from each other. In particular, the rear light units may be laterally movable relative to the license plate holder between an extended use position and a retracted non-use position. In this way, the load carrier can be transported in a very space-saving way when the rear light units are in their non-use position.

In order to supply the rear light units with electrical energy, the load carrier may further comprise power supply means. These power supply means may comprise a plug-connector for attachment to a vehicle-side power socket and a power cable to connect the plug-connector and the rear light units. As the rear light units are held at the basic frame and not at the sliding frame, no additional length of the cable is necessary when the sliding frame is moved from the front transport position into the rear access position. Accordingly, the power cable may be fixed section-by-section to the basic frame. Such a fixation ensures that no cable protrudes significantly from the basic frame which reduces the risk of being damaged.

According to an embodiment of the present invention, the load carrier may be formed as a bike carrier having fastening means for receiving and fixing bicycles arranged on the sliding frame. In particular, profile rails may be provided in order to receive wheels of a bicycle. Furthermore, it is possible to provide tensioning devices in order to fix the wheels of at least one bicycle in the longitudinal direction of the corresponding profile rail.

The load carrier may comprise a luggage box fixedly attached to the sliding frame. Such a luggage box allows to transport additional luggage which exceeds the capacity of the luggage compartment of a vehicle.

The load carrier may have a modular structure meaning that a luggage box or a bike carrying module may be releasably attached to the sliding frame and exchanged when desired. In particular, such a module may be braced to the sliding frame, preferably screwed thereto.

With regard to the embodiment of the invention, reference is also made to the sub-claims and to the following description of an exemplary embodiment with reference to the attached drawings. In the drawing shows:
- Figure 1 a: load carrier according to the present invention in a perspective view;
- Figure 2: the load carrier shown in figure 1 mounted to the rear side of a vehicle with the sliding frame in its front transport position in a side view;
- Figure 3: the load carrier shown in figure 1 with the sliding frame in its rear access position in a side view;
- Figure 4: the load carrier shown in figure 1 in another perspective view;
- Figure 5: the load carrier shown in figure 1 with the sliding frame in its front transport position in a cross-sectional view;
- Figure 6: the load carrier as shown in figure 5 with the sliding frame between the transport position and the access position in a crosssectional view;
- Figure 7: the load carrier shown in figures 1 to 6 being provided with a bike carrier module; and
- Figure 8: the load carrier shown in figures 1 to 6 being provided with a luggage box.

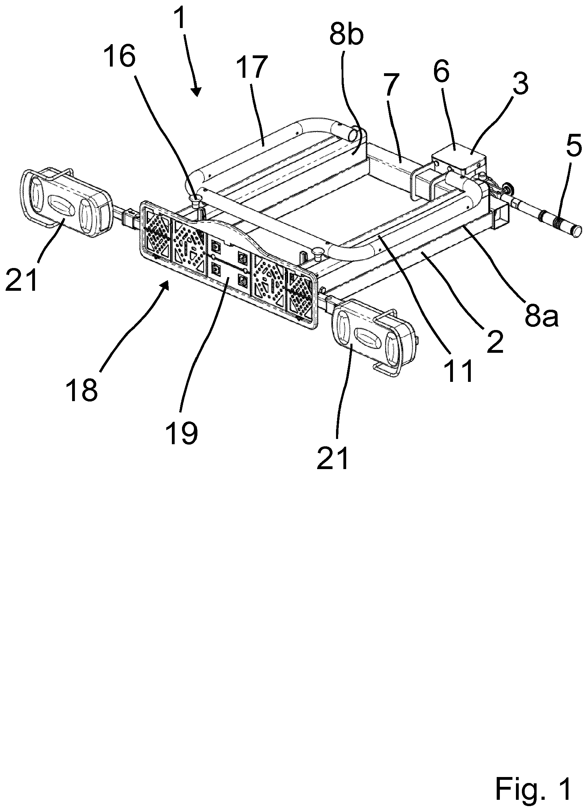

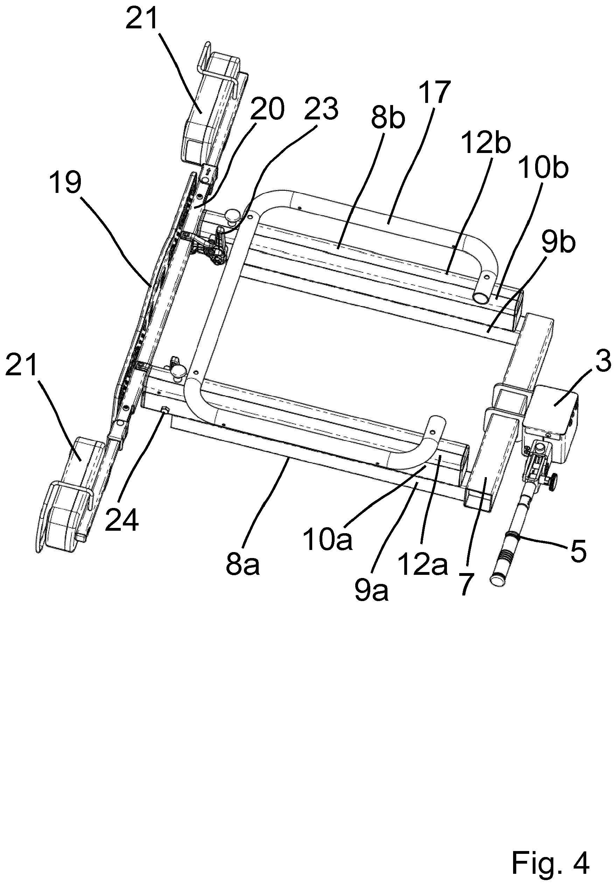

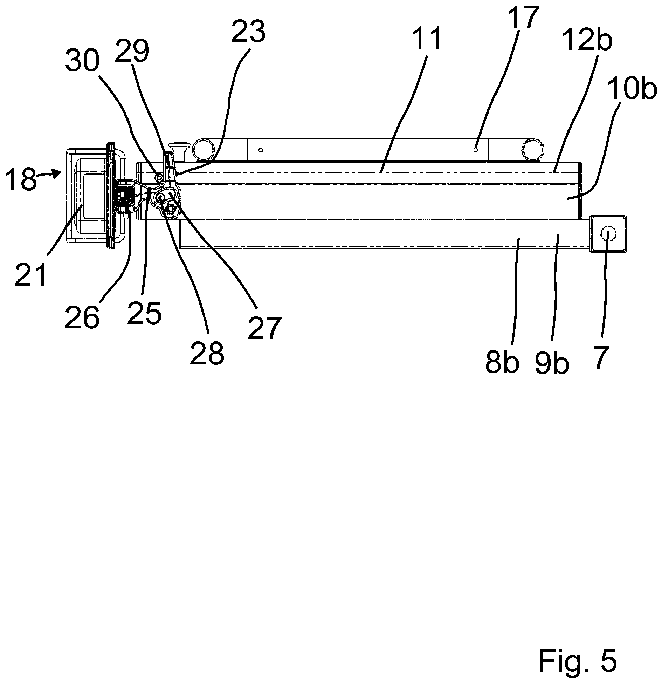

Figures 1 to 6 show a load carrier 1 according to the present invention for attachment to the rear side of a vehicle. The load carrier has a basic structure with a basic frame 2 and a coupling device 3 for attachment to a vehicle arranged at a front end of the basic frame 2.

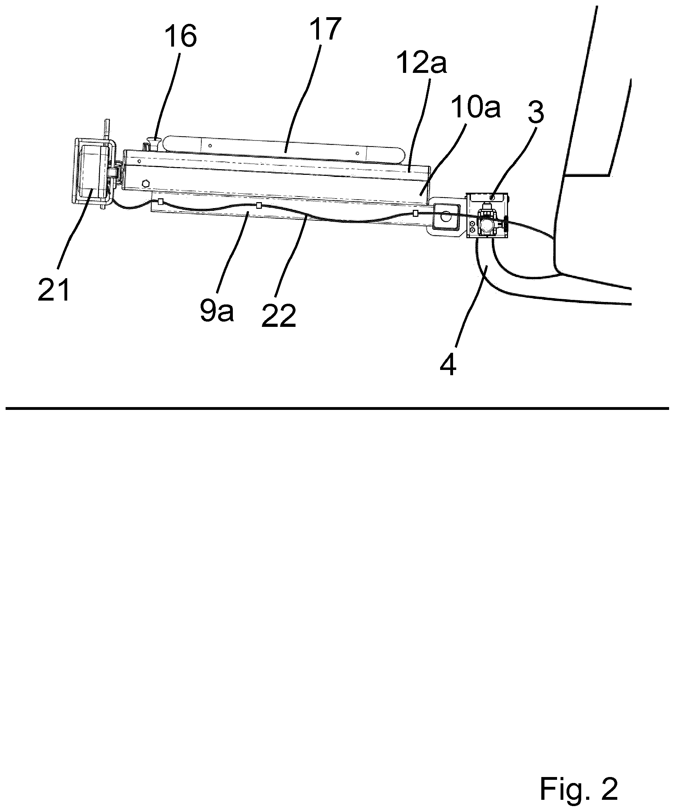

The coupling device 3 is formed such that it can engage in a force-fit manner around the ball of a trailer hitch 4 of a vehicle, as it is shown in figure 2. The coupling device 3 comprises a lever 5 for manual operation and a housing 6 including a coupling mechanism.

At its rear side, the housing 6 of the coupling device 3 is fixedly connected, presently welded to the basic frame 2. The basic frame 2 has a substantially C-shaped structure and comprises a transverse profile 7 extending perpendicularly to a longitudinal direction of the load carrier 1, which extends from the front end to the rear end of the load carrier 1, and two C-legs 8a, 8b extending to the rear side at the lateral ends of the transverse profile 7. Each C-leg 8a, 8b comprises a base profile 9a, 9b and an upper profile 10a, 10b, which lies above the base profile 9a, 9b and is fixedly attached thereto.

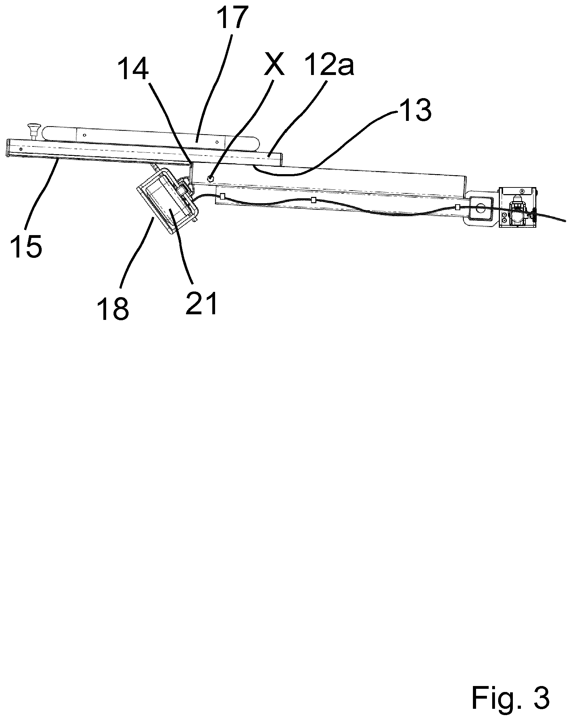

The load carrier 1 further comprises a sliding frame 11, which has two sliding profiles 12a, 12b one of which is arranged on each C-leg 8a, 8b of the basic frame 2. The sliding frame 11 is slidingly movable relative to the basic frame 2 between a front transport position, as shown in figures 1, 2, 4 and 5, and a rear access position, as shown in figure 3, in the longitudinal direction of the load carrier 1. When the sliding frame 11 is in its rear access position, it is possible to have access to the luggage compartment of the vehicle and to open the luggage compartment lid. Hence, it is not necessary to disconnect the load carrier 1 from the trailer hitch 4.

For this purpose, the upper profiles 10a, 10b of the C-legs 8a, 8b of the basic frame 2 have on their upper side a sliding guide in order to guide the sliding profiles 12a, 12b of the sliding frame 11. In concrete terms, the sliding guide 13 is formed as a groove 14 formed in the upper profiles 10a, 10b of the C-legs 8a, 8b. The grooves 14 are formed such that they can receive dovetail-shaped protrusions 15 formed at the bottom of the sliding profiles 12a, 12b of the sliding frame 11. In this way, the dovetail-shaped protrusions 15 engage into the corresponding grooves 14 in a form-fit manner allowing to move the sliding frame 11 relative to the basic frame 2 translationally in one direction but avoiding any movements transversely to the extension of the grooves 14 and the protrusions 15.

The sliding frame 11 further has arresting means in order to lock the sliding frame 11 relative to the basic frame 2. The arresting means comprise two locking pins 16 one of which is arranged at each sliding profile 12a, 12b. The locking pins 16 are movable between a locking position, in which they engage into corresponding holes formed in the basic frame 2 and an unlocking position, in which they are out of engagement from these holes. The locking pins 16 are biased, by means of a spring element, into their locking position. In this way, an unintended movement of the sliding frame 11 relative to the basic frame 2 can be avoided as the user must intentionally move the locking pins 16 out of engagement in order to be able to move the sliding frame 11 relative to the basic frame 2.

A yoke 17 is pivotably held at the front end of the sliding frame 11, in concrete terms at both sliding profiles 12a, 12b. This yoke 17 can be moved between a horizontal position, in which the yoke 17 lies on the sliding profiles 12a, 12b, as shown in figures 1 to 6, and a vertical position, in which the yoke 17 can be used to fix a load, for example a bicycle, to the load carrier.

The load carrier 1 further comprises a functional device 18, which is movably held at the rear end of the basic frame 2. The functional device 18 comprises a license plate holder 19 which is carried by a basic carrier element 20. Furthermore, a rear light unit 21 is arranged on both sides of the license plate holder 19. The rear light units 21 are laterally movable relative to the license plate holder 19 between an extended use-position, in which they are positioned apart from the license plate holder 19, and a retracted non-use position, in which they are moved towards the license plate holder 19 slidingly in order to allow a transport of the load carrier 1 in a space-saving way.

In order to supply the rear light units 21 with electrical energy, the load carrier 1 comprises power supply means, presently a plug-connector for attachment to a vehicle side power socket and a power cable 22 to connect the plug-connector and the rear light units 21. As it is visible in figures 2 and 3, the power cable 22 is fixed section-by-section to the basic frame 2.

The functional device 18 is pivotably movable between a working position, in which the functional device 18 extends partially into the movement range of the sliding frame 11, and a release position, in which the functional device 18 is moved out of the movement range of the sliding frame 11, about a pivot axis X. For this purpose, the functional device 18 is held at the basic frame 2 by means of two support elements 23, each of which is pivotably connected to the rear end section of one upper profile 10a, 10b of the C-legs 8a, 8b on their inner side. In concrete terms, each upper profile 10a, 10b carries a pivot pin 24 formed as a screw extending into corresponding holes formed in the support elements 23.

Each support element 23 is fixedly connected to the functional device 18. In concrete terms, each support element 23 comprises a supporting arm 25 extending from the pivot axis X to the functional device 18. At their ends, the supporting arms 25 of the support elements 23 have a U-shaped recess 26 receiving the basic carrier element 20 of the functional device 18. The basic carrier element 20 is screwed to the supporting arms 25 of the support elements 23.

In order to limit the pivot movement of the support elements 23 and of the functional device 18, each support element 23 has an oblong hole 27, into which a corresponding guide bolt 28 fixedly attached to the basic frame 2 extends. The oblong holes 27 of the support elements 23 have a curved shape extending along a circle about the pivot axis X. The ends of the oblong holes 27 define the limits of the pivot movement of the support elements 23 and the functional device 18. When the functional device 18 is in its release position, the guide bolts 28 reach one end of the oblong holes 27.

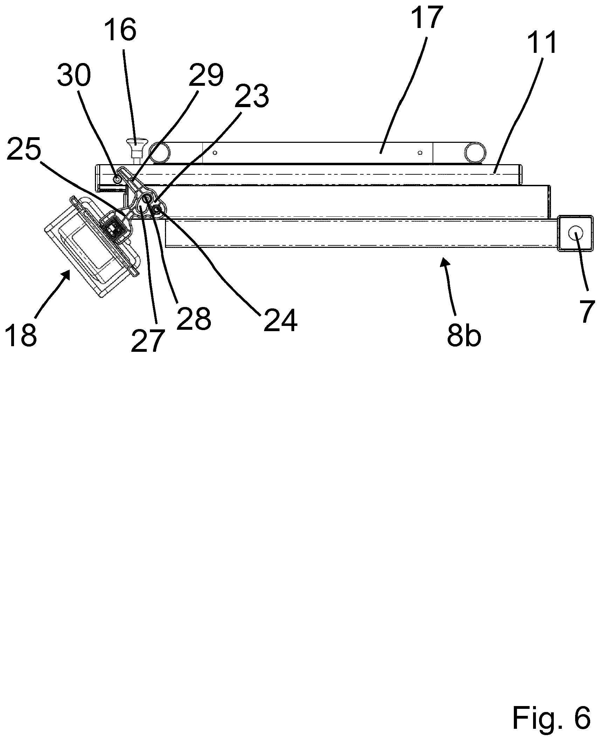

The support elements 23 each comprise a coupling arm 29 extending from the pivot axis X in the direction of the sliding frame 11. The angle between the supporting arm 25 and the coupling arm 29 is about 90°. The sliding frame 11 comprises at each sliding profile 12a, 12b one pusher dog pin 30 assigned to a corresponding support element 23. The pusher dog pins 30 are formed such that they release the functional device 18 and the support elements 23 allowing them to move in their release position, when the sliding frame 11 is moved out of its transport position, as shown in figure 6. When the sliding frame 11 is moved into its transport position, the pusher dog pins 30 apply a momentum about the pivot axis X by pushing against the coupling arm 29 of the support elements 23 in order to bring the functional device 18 into its working position, against the gravity force applying a momentum on the support elements 23 and the functional device 18 in the direction of their release position. In this way, the functional device 18 and the sliding frame 11 are coupled such that the functional device 18 is automatically moved into its release position, when the sliding frame 11 is moved out of the transport position in the direction of its access position and the functional device 18 is automatically moved into its working position, when the sliding frame 11 is moved into the front transport position.

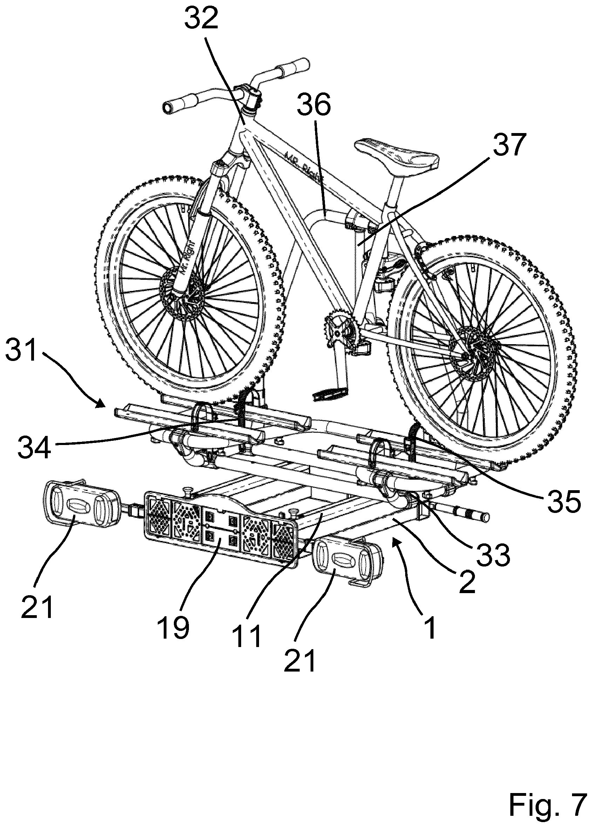

Figure 7 shows the load carrier shown in figures 1 to 6 being provided with a bike carrier module 31 for carrying a bike 32 attached to the sliding frame 11. This bike carrier module 31 comprises a base support structure 33, on which in total four profile rails 34 for receiving the wheels of bicycles are arranged. A pair of two profile rails 34 are aligned to each other for receiving the front wheel and the rear wheel of the bike 32. In total, two bikes can be transported with the bike carrier module 31. Tensioning means 35 in the form of tensioning belts are provided at each profile rail in order to brace the wheels of the bike 32 against the profile rails 34.

As it is visible in figure 7, the bike carrier module comprises a yoke 36 which is fixed to the base support structure 33 of the bike carrier module 31. This yoke 36 allows a further fixation of the frame of the bike 32 by means of a strap frame holder 37. By means of the fixation of the wheels in the profile rails 34 and an additional fixation by means of a strap frame holder 37 to the yoke 36, a stable fixation of the bike 32 can be achieved.

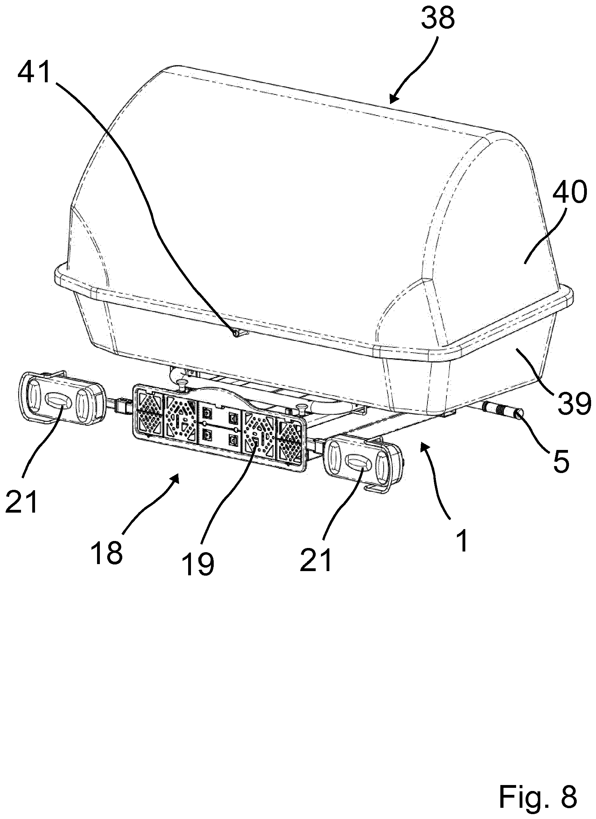

Figure 8 shows the load carrier shown in figures 1 to 6 being provided with a luggage box 38 attached to the sliding frame 11. The luggage box 38 comprises a bottom element 39 attached to the sliding frame 11 and a luggage box lid 40 which can be opened in order to get access to the interior space of the luggage box 38. Furthermore, a lock 41 is provided to lock the luggage box lid 40 and to save the luggage stored inside the luggage box 38.

If the load carrier 1 carrying a bike carrier module 31 or a luggage box 38 is mounted to the rear side of a vehicle, as it is shown in figure 2, and the user wants to get access to the luggage compartment of the vehicle, he simply must bring the locking pins 16 out of engagement from the corresponding hole formed in the basic frame 2 and has to move the sliding frame 11 backwards into its access position. By moving the sliding frame 11 backwards, the pusher dog pins 30 release the coupling arms 29 of the support elements 23. By means of the gravity force acting on the functional device 18, the support elements 23 and the functional device 18 are tilted downwards out of the movement range of the sliding frame 11 allowing the sliding frame 11 to be moved backwards. When the pusher dog pins 30 come out of contact from the coupling arms 29 of the support elements 23, a further tilting movement of the functional device 18 and the support elements 23 is avoided, as the guide bolts 28 reach the ends of the oblong holes 27 thus stopping the movement and defining the release position of the functional device 18.

When the sliding frame 11 is moved from the rear access position to the front transport position, at a certain point the pusher dog pins 30 come into contact with the couplings arms 29 of the support elements 23 and push against the coupling arms 29. A further movement of the sliding frame 11 applies a momentum to the support elements 23 and the functional device 18 about the pivot axis X, bringing them back into their working position against a momentum caused by the gravity force. When the sliding frame 11 has reached its front transport position, the locking pins 16 engage due to the restoring force of the spring elements into the corresponding holes formed in the basic frame 2 such that the sliding frame 11 is arrested at the basic frame 2 in its transport position.

### REFERENCE CHARACTER LIST

- 1: Load Carrier
- 2: Basic frame
- 3: Coupling Device
- 4: Trailer Hitch
- 5: Tension Lever
- 6: Housing
- 7: Transverse profile
- 8a, 8b: C-Legs
- 9a, 9b: Base Profile
- 10a, 10b: Upper Profile
- 11: Sliding Frame
- 12a, 12b: Sliding Profile
- 13: Sliding Guide
- 14: Groove
- 15: Dovetail-shaped Protrusion
- 16: Locking Pin
- 17: Yoke
- 18: Functional Device
- 19: License Plate Holder
- 20: Basic Carrier Element
- 21: Rear Light Unit
- 22: Power Cable
- 23: Support Element
- 24: Pivot pin
- 25: Supporting Arm
- 26: U-shaped Recess
- 27: Oblong Hole
- 28: Guide Bolt
- 29: Coupling Arm
- 30: Pusher Dog Pin
- 31: Bike Carrier Module
- 32: Bike
- 33: Base Support Structure
- 34: Profile Rails
- 35: Tensioning Means
- 36: Yoke
- 37: Strap Frame Holder
- 38: Luggage Box
- 39: Bottom Element
- 40: Luggage Box Lid
- 41: Lock
- X: Pivot Axis

## Claims

1. Load carrier (1), in particular a carrier for bicycles and/or luggage, for attachment to the rear side of a vehicle, with
a basic structure having a basic frame (2) and a coupling device (3) for attachment to a vehicle arranged at a front end of the basic frame (2),
a sliding frame (11) for receiving a load, in particular for receiving bicycles or a luggage box, wherein the sliding frame (11) is slidingly movable relative to the basic frame (2) between a front transport position and a rear access position, and
a functional device (18), which is movably held at the basic frame (2), in particular at a rear end section of the basic frame (2), between a working position, in which the functional device (18) extends at least partially into the movement range of the sliding frame (11), and a release position, in which the functional device (18) is moved out of the movement range of the sliding frame (11) allowing to move the sliding frame (11) into its rear access position.

2. Load carrier (1) according to claim 1, **characterized in that** the functional device (18) and the sliding frame (11) are coupled such that the functional device (18) is automatically moved into its release position, when the sliding frame (11) is moved out of the transport position in the direction of its access position, and the functional device (18) is automatically moved into its working position, when the sliding frame (11) is moved into the front transport position and/or that the functional device (18) is pivotably held at the basic frame (2) between its working position and its release position about a pivot axis (X), which extends transversely, in particular perpendicularly to a longitudinal direction of the load carrier (1).

3. Load carrier (1) according to claim 2, **characterized in that** the load carrier (1) comprises at least one support element, in particular two support elements (23), each support element (23) being fixedly connected to the functional device (18) and pivotably connected to the basic frame (2).

4. Load carrier (1) according to claim 3, **characterized in that** at least one, in particular each support element (23) has an oblong hole (27) into which a corresponding guide bolt (28) fixedly attached to the basic frame (2) extends in order to limit the movability of the support element (23) and the functional device (18), wherein in particular the oblong hole (27) of at least one, in particular of each support element (23) has a curved shape extending along a circle about the pivot axis (X) and/or is formed such that the guide bolt (28) reaches one end of the oblong hole (27) when the functional device (18) is in its release position, wherein preferably at least one, in particular each support element (23) comprises two arms, wherein one supporting arm (25) extends from the pivot axis (X) to the functional device (18) and is fixedly connected, in particular screwed, thereto, and wherein the other coupling arm (29) extends from the pivot axis (X) in the direction of the sliding frame (11).

5. Load carrier (1) according claim 3 or 4, **characterized in that** the sliding frame (11) comprises at least one pusher dog element, in particular in the form of a pusher dog pin (30), assigned to a corresponding support element (23) and formed such that it releases the functional device (18) and the support element(s) (23) allowing them to move into their release position, when the sliding frame (11) is moved out of its transport position, and such that it applies a momentum about the pivot axis (X) by pushing against the coupling arm (29) of the support element (23) in order to bring the functional device (18) into its working position, when the sliding frame (11) is moved into its transport position, wherein in particular the functional device (18) projects to the rear side from the basic frame (2) and from the pivot axis (X) such that the functional device (18) is moved into its release position by gravity force when the pusher dog element (30) releases the functional device (18) and the corresponding support element (23).

6. Load carrier (1) according to any of the preceding claims, **characterized in that** the basic frame (2) has a C-shaped structure open to the rear side.

7. Load carrier (1) according to any of claims 3 to 5 and claim 6, **characterized in that** the load carrier (1) comprises exactly two support elements (23), wherein each C-leg holds one support element (23) in a pivotable manner at its rear end section, the support elements (23) in particular being arranged at the inner sides of the C-legs (8a, 8b).

8. Load carrier (1) according to any of the preceding claims, **characterized in that** the basic frame (2) comprises, in particular at its upper side and preferably on each C-leg, at least one sliding guide (13) in order to guide the sliding frame (11), wherein preferably the sliding guide (13) is formed as a groove (14), in particular as a dove tail-shaped groove (14), which is engaged by a corresponding protrusion (15) formed in the sliding frame (11) in a form-fit manner.

9. Load carrier (1) according to any of the preceding claims, **characterized in that** arresting means are provided in order to lock the sliding frame (11) relative to the basic frame (2) in its transport position, wherein in particular the arresting means comprise at least one locking pin (16) held at the sliding frame (11) and movable between a locking position, in which the locking pin (16) engages into a corresponding hole formed in the basic frame (2), and an unlocking position, in which the locking pin (16) is out of engagement from a corresponding hole formed in the basic frame (2) thus allowing the sliding frame (11) to be moved relative to the basic frame (2).

10. Load carrier (1) according to claim 9, **characterized in that** the arresting means comprises exactly two locking pins (16), wherein, in particular, each of the locking pins is assigned to one C-leg of the basic frame (2) and/or each locking pin (16) is biased, in particular by means of a spring element, into its locking position.

11. Load carrier (1) according to any of the preceding claims, **characterized in that** the functional device (18) comprises a license plate holder (19), wherein in particular the functional device (18) comprises a basic carrier element (20) carrying the license plate holder (19) and fixedly attached to two support elements (23).

12. Load carrier (1) according to any of the preceding claims, **characterized in that** the functional device (18) comprises two rear light units (21) spaced laterally apart from each other, wherein in particular the rear light units (21) are laterally movable relative to the license plate holder (19) between an extended use position and a retracted non-use position.

13. Load carrier (1) according to claim 12, **characterized in that** the load carrier further comprises power supply means to supply the rear light units (21) with electrical energy.

14. Load carrier (1) according to claim 13, **characterized in that** the power supply means comprise a plug-connector for attachment to a vehicle-side power socket and a power cable (22) to connect the plug-connector and the rear light units (21), wherein preferably the power cable (22) is fixed section-by-section to the basic frame (2).

15. Load carrier (1) according to any of the preceding claims, **characterized in that** the load carrier (1) is formed as a bike carrier having fastening means for receiving and fixing bicycles arranged on the sliding frame (11) or that the load carrier (1) comprises a luggage box (37) fixedly attached to the sliding frame (11).

## Patentansprüche

1. Lastenträger (1), insbesondere Fahrrad- und/oder Gepäckträger, zur Befestigung an der Rückseite eines Fahrzeugs, mit
einem Grundaufbau, der einen Basisrahmen (2) und eine an einem vorderen Ende des Basisrahmens (2) angeordnete Kupplungsvorrichtung (3) zur Befestigung an einem Fahrzeug hat,
einen Schieberahmen (11) zur Aufnahme einer Last, insbesondere zur Aufnahme von Fahrrädern oder einer Gepäckbox, wobei der Schieberahmen (11) relativ zum Basisrahmen (2) zwischen einer vorderen Transportstellung und einer hinteren Zugangsstellung verschiebbar ist, und
einer Funktionseinrichtung (18), die am Basisrahmen (2), insbesondere an einem hinteren Endabschnitt des Basisrahmens (2), zwischen einer Arbeitsstellung, in der die Funktionseinrichtung (18) zumindest teilweise in den Bewegungsbereich des Schieberahmens (11) hineinragt, und einer Freigabestellung, in der die Funktionseinrichtung (18) aus dem Bewegungsbereich des Schieberahmens (11) herausbewegt ist, so dass der Schieberahmen (11) in seine hintere Zugangsstellung bewegt werden kann, beweglich gehalten ist.

2. Lastenträger (1) nach Anspruch 1, **dadurch gekennzeichnet, dass** die Funktionseinrichtung (18) und der Schieberahmen (11) derart gekoppelt sind, dass die Funktionseinrichtung (18) automatisch in ihre Freigabestellung bewegt wird, wenn der Schieberahmen (11) aus der Transportstellung in Richtung seiner Zugangsstellung bewegt wird, und die Funktionseinrichtung (18) automatisch in ihre Arbeitsstellung bewegt wird, wenn der Schieberahmen (11) in die vordere Transportstellung bewegt wird und/oder dass die Funktionseinrichtung (18) um eine quer, insbesondere senkrecht zu einer Längsrichtung des Lastträgers (1) verlaufende Schwenkachse (X) zwischen ihrer Arbeitsstellung und ihrer Freigabestellung schwenkbar am Basisrahmen (2) gehalten ist.

3. Lastenträger (1) nach Anspruch 2, **dadurch gekennzeichnet, dass** der Lastträger (1) mindestens ein Stützelement, insbesondere zwei Stützelemente (23), aufweist, wobei jedes Stützelement (23) fest mit der Funktionseinrichtung (18) und schwenkbar mit dem Grundrahmen (2) verbunden ist.

4. Lastenträger (1) nach Anspruch 3, **dadurch gekennzeichnet, dass** mindestens ein, insbesondere jedes Stützelement (23) ein Langloch (27) aufweist, in das sich ein entsprechender, fest am Basisrahmen (2) angebrachter Führungsbolzen (28) erstreckt, um die Beweglichkeit des Stützelements (23) und der Funktionseinrichtung (18) zu begrenzen, wobei insbesondere das Langloch (27) mindestens eines, insbesondere jedes Stützelements (23) eine kreisförmig um die Schwenkachse (X) verlaufende Kurvenform aufweist und/oder so ausgebildet ist, dass der Führungsbolzen (28) in der Freigabestellung der Funktionseinrichtung (18) ein Ende des Langlochs (27) erreicht, wobei vorzugsweise mindestens ein, insbesondere jedes Stützelement (23) zwei Arme aufweist, wobei sich ein Stützarm (25) von der Schwenkachse (X) zur Funktionseinrichtung (18) erstreckt und mit dieser fest verbunden, insbesondere verschraubt ist, und wobei sich der andere Koppelarm (29) von der Schwenkachse (X) in Richtung des Schieberahmens (11) erstreckt.

5. Lastenträger (1) nach Anspruch 3 oder 4, **dadurch gekennzeichnet, dass** der Schieberahmen (11) mindestens ein Mitnehmerelement, insbesondere in Form eines Mitnehmerstifts (30), aufweist, das einem entsprechenden Stützelement (23) zugeordnet und so ausgebildet ist, dass es die Funktionseinrichtung (18) und das oder das/die Stützelement(e) (23) freigibt, um es/sie in ihre Freigabestellung zu bringen, wenn der Schieberahmen (11) aus seiner Transportstellung bewegt wird, und so, dass er ein Moment um die Drehachse (X) ausübt, indem er gegen den Koppelarm (29) des Stützelements (23) drückt, um die Funktionseinrichtung (18) in ihre Arbeitsstellung zu bringen, wenn der Schieberahmen (11) in seine Transportstellung bewegt wird, wobei insbesondere die Funktionseinrichtung (18) vom Basisrahmen (2) und von der Schwenkachse (X) nach hinten absteht, so dass die Funktionseinrichtung (18) durch Schwerkraft in ihre Freigabestellung bewegt wird, wenn das Mitnehmerelement (30) die Funktionseinrichtung (18) und das entsprechende Stützelement (23) freigibt.

6. Lastenträger (1) nach einem der vorhergehenden Ansprüche, **dadurch gekennzeichnet, dass** der Basisrahmen (2) eine nach hinten offene C-förmige Struktur aufweist.

7. Lastenträger (1) nach einem der Ansprüche 3 bis 5 und 6, **dadurch gekennzeichnet, dass** der Lastträger (1) genau zwei Stützelemente (23) aufweist, wobei jeder C-Schenkel an seinem hinteren Endabschnitt ein Stützelement (23) schwenkbar hält, wobei die Stützelemente (23) insbesondere an den Innenseiten der C-Schenkel (8a, 8b) angeordnet sind.

8. Lastenträger (1) nach einem der vorhergehenden Ansprüche, **dadurch gekennzeichnet, dass** der Basisrahmen (2) insbesondere an seiner Oberseite und vorzugsweise an jedem C-Schenkel mindestens eine Gleitführung (13) zur Führung des Schieberahmens (11) aufweist, wobei vorzugsweise die Gleitführung (13) als Nut (14), insbesondere als schwalbenschwanzförmige Nut (14), ausgebildet ist, in die ein entsprechender, im Schieberahmen (11) formschlüssig ausgebildeter Vorsprung (15) eingreift.

9. Lastenträger (1) nach einem der vorhergehenden Ansprüche, **dadurch gekennzeichnet, dass** Arretiermittel vorgesehen sind, um den Schieberahmen (11) gegenüber dem Grundrahmen (2) in seiner Transportstellung zu verriegeln, wobei insbesondere die Arretiermittel mindestens einen am Schieberahmen (11) gehaltenen Verriegelungsstift (16) umfassen, der zwischen einer Verriegelungsstellung, in der der Verriegelungsstift (16) in ein entsprechendes, in dem Basisrahmen (2) ausgebildetes Loch eingreift, und einer Entriegelungsstellung, in der der Verriegelungsstift (16) außer Eingriff von einem entsprechenden, in dem Basisrahmen (2) ausgebildeten Loch ist, so dass der Schieberahmen (11) relativ zu dem Basisrahmen (2) bewegt werden kann.

10. Lastenträger (1) nach Anspruch 9, **dadurch gekennzeichnet, dass** das Arretiermittel genau zwei Rastbolzen (16) umfasst, wobei insbesondere jeder der Rastbolzen einem C-Schenkel des Grundrahmens (2) zugeordnet ist und/oder jeder Rastbolzen (16), insbesondere mittels eines Federelements, in seine Verriegelungsstellung vorgespannt ist.

11. Lastenträger (1) nach einem der vorhergehenden Ansprüche, **dadurch gekennzeichnet, dass** die Funktionseinrichtung (18) eine Kennzeichenhalterung (19) aufweist, wobei insbesondere die Funktionseinrichtung (18) ein Basisträgerelement (20) aufweist, das die Kennzeichenhalterung (19) trägt und an zwei Stützelementen (23) fest angebracht ist.

12. Lastenträger (1) nach einem der vorhergehenden Ansprüche, **dadurch gekennzeichnet, dass** die Funktionseinrichtung (18) zwei seitlich voneinander beabstandete Rücklichteinheiten (21) aufweist, wobei insbesondere die Rücklichteinheiten (21) relativ zum Kennzeichenhalter (19) zwischen einer ausgefahrenen Gebrauchsstellung und einer eingefahrenen Nichtgebrauchsstellung seitlich bewegbar sind.

13. Lastenträger (1) nach Anspruch 12, **dadurch gekennzeichnet, dass** der Lastträger ferner Stromversorgungsmittel zur Versorgung der Rücklichteinheiten (21) mit elektrischer Energie umfasst.

14. Lastenträger (1) nach Anspruch 13, **dadurch gekennzeichnet, dass** die Stromversorgungsmittel einen Steckverbinder zum Anschluss an eine fahrzeugseitige Steckdose und ein Stromkabel (22) zum Verbinden des Steckverbinders und der Rücklichteinheiten (21) umfassen, wobei das Stromkabel (22) vorzugsweise abschnittsweise am Basisrahmen (2) befestigt ist.

15. Lastenträger (1) nach einem der vorhergehenden Ansprüche, **dadurch gekennzeichnet, dass** der Lastenträger (1) als Fahrradträger mit Befestigungsmitteln zur Aufnahme und Fixierung von am Schieberahmen (11) angeordneten Fahrrädern ausgebildet ist oder dass der Lastenträger (1) eine am Schieberahmen (11) fest angebrachte Gepäckbox (37) umfasst.

## Revendications

1. Porte-bagages (1), en particulier porte-bicyclettes et/ou porte-bagages, à fixer à l'arrière d'un véhicule, avec
une structure de base comportant un cadre de base (2) et un dispositif d'accouplement (3) pour la fixation à un véhicule, disposé à une extrémité avant du cadre de base (2),
un cadre coulissant (11) pour recevoir une charge, en particulier pour recevoir des bicyclettes ou un coffre à bagages, dans lequel le cadre coulissant (11) est mobile de manière coulissante par rapport au cadre de base (2) entre une position de transport avant et une position d'accès arrière, et
un dispositif fonctionnel (18), qui est maintenu de manière mobile sur le cadre de base (2), en particulier sur une section d'extrémité arrière du cadre de base (2), entre une position de travail, dans laquelle le dispositif fonctionnel (18) s'étend au moins partiellement dans la zone de mouvement du cadre coulissant (11), et une position de libération, dans laquelle le dispositif fonctionnel (18) est déplacé hors de la zone de mouvement du cadre coulissant (11) permettant de déplacer le cadre coulissant (11) dans sa position d'accès arrière.

2. Porte-charge (1) selon la revendication 1, **caractérisé en ce que** le dispositif fonctionnel (18) et le cadre coulissant (11) sont couplés de telle sorte que le dispositif fonctionnel (18) est déplacé automatiquement dans sa position de libération, lorsque le cadre coulissant (11) est déplacé de la position de transport en direction de sa position d'accès, et le dispositif fonctionnel (18) est déplacé automatiquement dans sa position de travail, lorsque le cadre coulissant (11) est déplacé dans la position de transport avant et/ou que le dispositif fonctionnel (18) est maintenu de manière pivotante sur le cadre de base (2) entre sa position de travail et sa position de libération autour d'un axe de pivotement (X) qui s'étend transversalement, en particulier perpendiculairement à une direction longitudinale du porte-charge (1).

3. Porte-charge (1) selon la revendication 2, **caractérisé en ce que** le porte-charge (1) comprend au moins un élément de support, en particulier deux éléments de support (23), chaque élément de support (23) étant relié de manière fixe au dispositif fonctionnel (18) et relié de manière pivotante au cadre de base (2).

4. Porte-charge (1) selon la revendication 3, **caractérisé en ce qu'**au moins un, en particulier chaque élément de support (23), présente un trou oblong (27) dans lequel s'étend un boulon de guidage (28) correspondant fixé au châssis de base (2) afin de limiter la mobilité de l'élément de support (23) et du dispositif fonctionnel (18), le trou oblong (27) d'au moins un, en particulier de chaque élément de support (23) a une forme incurvée s'étendant le long d'un cercle autour de l'axe de pivotement (X) et/ou est formé de telle sorte que le boulon de guidage (28) atteint une extrémité du trou oblong (27) lorsque le dispositif fonctionnel (18) est dans sa position de libération, dans lequel de préférence au moins un, en particulier chaque élément de support (23) comprend deux bras, dans lequel un bras de support (25) s'étend depuis l'axe de pivotement (X) vers le dispositif fonctionnel (18) et est relié fixement, en particulier vissé, à celui-ci, et dans lequel l'autre bras de couplage (29) s'étend depuis l'axe de pivotement (X) en direction du cadre coulissant (11).

5. Porte-charge (1) selon la revendication 3 ou 4, **caractérisé en ce que** le cadre coulissant (11) comprend au moins un élément de pousser, en particulier sous la forme d'un axe de poussée (30), associé à un élément de support (23) correspondant et formé de telle sorte qu'il libère le dispositif fonctionnel (18) et le ou les éléments de support (23) en le/leur permettant de se déplacer dans sa/leur position de libération, lorsque le cadre coulissant (11) est déplacé hors de sa position de transport, et tel qu'il applique un momentum autour de l'axe de pivotement (X) en poussant contre le bras d'accouplement (29) de l'élément de support (23) afin d'amener le dispositif fonctionnel (18) dans sa position de travail, lorsque le cadre coulissant (11) est déplacé dans sa position de transport, dans lequel, en particulier, le dispositif fonctionnel (18) fait saillie vers l'arrière du cadre de base (2) et de l'axe de pivotement (X) de telle sorte que le dispositif fonctionnel (18) est déplacé dans sa position de libération par la force de gravité lorsque l'élément de pousser (30) libère le dispositif fonctionnel (18) et l'élément de support correspondant (23).

6. Porte-charge (1) selon l'une quelconque des revendications précédentes, **caractérisé en ce que** le cadre de base (2) présente une structure en forme de C ouverte sur le côté arrière.

7. Porte-charge (1) selon l'une des revendications 3 à 5 et la revendication 6, **caractérisé en ce que** le porte-charge (1) comprend exactement deux éléments de support (23), chaque jambe en C maintenant un élément de support (23) de manière pivotante au niveau de sa section d'extrémité arrière, les éléments de support (23) étant en particulier disposés sur les côtés intérieurs des jambes en C (8a, 8b).

8. Porte-charge (1) selon l'une quelconque des revendications précédentes, **caractérisé en ce que** le cadre de base (2) comprend, notamment sur sa face supérieure et de préférence sur chaque jambe en C, au moins un guide de coulissement (13) pour guider le cadre coulissant (11), le guide de coulissement (13) étant de préférence réalisé sous la forme d'une rainure (14), notamment en forme de queue d'aronde (14), dans laquelle s'engage par complémentarité de forme une saillie (15) correspondante réalisée dans le cadre coulissant (11).

9. Porte-charge (1) selon l'une quelconque des revendications précédentes, **caractérisé en ce que** des moyens d'arrêt sont prévus afin de verrouiller le cadre coulissant (11) par rapport au cadre de base (2) dans sa position de transport, dans lequel en particulier les moyens d'arrêt comprennent au moins une goupille de verrouillage (16) maintenue au niveau du cadre coulissant (11) et mobile entre une position de verrouillage, dans laquelle la goupille de verrouillage (16) s'engage dans un trou correspondant formé dans le cadre de base (2), et une position de déverrouillage, dans laquelle la goupille de verrouillage (16) n'est pas engagée dans un trou correspondant formé dans le cadre de base (2), permettant ainsi au cadre coulissant (11) d'être déplacé par rapport au cadre de base (2).

10. Porte-charge (1) selon la revendication 9, **caractérisé en ce que** le moyen d'arrêt comprend exactement deux goupilles de verrouillage (16), chacune des goupilles de verrouillage étant notamment associée à une jambe en C du cadre de base (2) et/ou chaque goupille de verrouillage (16) étant précontrainte dans sa position de verrouillage, notamment au moyen d'un élément élastique.

11. Porte-charge (1) selon l'une quelconque des revendications précédentes, **caractérisé en ce que** le dispositif fonctionnel (18) comprend un support de plaque d'immatriculation (19), dans lequel en particulier le dispositif fonctionnel (18) comprend un élément porteur de base (20) portant le support de plaque d'immatriculation (19) et attaché de manière fixe à deux éléments de support (23).

12. Porte-charge (1) selon l'une quelconque des revendications précédentes, **caractérisé en ce que** le dispositif fonctionnel (18) comprend deux unités de feux arrière (21) espacées latéralement l'une de l'autre, les unités de feux arrière (21) étant notamment mobiles latéralement par rapport au support de plaque d'immatriculation (19) entre une position d'utilisation étendue et une position de non-utilisation rétractée.

13. Porte-charge (1) selon la revendication 12, **caractérisé en ce que** le porte-charge comprend en outre des moyens d'alimentation en énergie pour alimenter les unités de feux arrière (21) en énergie électrique.

14. Porte-charge (1) selon la revendication 13, **caractérisé en ce que** les moyens d'alimentation en énergie comprennent un connecteur à fiche pour la fixation à une prise de courant côté véhicule et un câble d'alimentation (22) pour connecter le connecteur à fiche et les unités de feux arrière (21), dans lequel de préférence le câble d'alimentation (22) est fixé par section au cadre de base (2).

15. Porte-bagages (1) selon l'une quelconque des revendications précédentes, **caractérisé en ce que** le porte-bagages (1) est réalisé sous la forme d'un porte-vélos comportant des moyens de fixation pour recevoir et fixer des vélos disposés sur le cadre coulissant (11) ou **en ce que** le porte-bagages (1) comprend un coffre à bagages (37) attaché de manière fixe au cadre coulissant (11).
